# EUROPÄISCHE PATENTSCHRIFT

(11) **EP 1 646 799 B1**
(45) Veröffentlichungstag und Bekanntmachung des Hinweises auf die Patenterteilung: **09.09.2009**
(21) Anmeldenummer: 04763033.0
(22) Anmeldetag: 28.06.2004
(51) Int. Cl.: F16D 25/10

(54) **KUPPLUNGSANORDNUNG IN EINEM AUTOMATGETRIEBE MIT BAURAUMSPARENDER KÜHLMITTELVERSORGUNG**
CLUTCH ARRANGEMENT IN AN AUTOMATIC TRANSMISSION HAVING AN INSTALLATION SPACE-SAVING COOLANT SUPPLY
SYSTEME D'EMBRAYAGE DANS UNE BOITE DE VITESSES AUTOMATIQUE A ALIMENTATION DE REFRIGERANT A ENCOMBREMENT REDUIT

(30) Priorität: 23.07.2003 DE 10333431
(43) Veröffentlichungstag der Anmeldung: 19.04.2006
(73) Patentinhaber: ZF Friedrichshafen AG, 88038 Friedrichshafen (DE)
(72) Erfinder: TIESLER, Peter, 88074 Meckenbeuren (DE)
(86) Internationale Anmeldenummer: PCT/EP2004/006963
(87) Internationale Veröffentlichungsnummer: WO 2005/019675

(56) Entgegenhaltungen:
- DE-A- 10 034 677
- FR-A- 2 815 093
- US-A- 4 010 833
- US-A- 5 887 690
- US-A- 6 120 410

## Beschreibung

Die Erfindung betrifft eine Kupplungsanordnung in einem Automatgetriebe gemäß dem Oberbegriff des Patentanspruchs 1.

Für die Anordnung von Kupplungen und deren Betätigungsvorrichtungen in Automatgetrieben gibt es vielfältige bekannte Beispiele. So zeigt die gattungsgemäße US 6,120,410 eine Kupplungsanordnung in einem Automatgetriebe, bei der ein im Querschnitt etwa topfförmig ausgebildetes Bauteil als Außenlamellenträger ausgebildet ist. Radial innerhalb dieses Außenlamellenträgers sind die Innen- und Außenlamellen von zwei axial nebeneinander und auf gleicher radialer Höhe angeordneten Lamellenkupplungen, Kolben-Zylinder-Anordnungen mit jeweils einem Betätigungskolben für die Betätigung der beiden Kupplungen sowie Druckausgleichsräume für einen dynamischen Druckausgleich hinsichtlich der Betätigungskraft der Betätigungskolben ausgebildet.

Zudem ist es aus dieser Druckschrift bekannt, einen Druckausgleichsraum unter Nutzung eines Kupplungskolbens und einer sogenannten Stauscheibe zu bilden, sowie zwischen der Stauscheibe und dem Kolben eine Rückstellfeder anzuordnen. Eine Schmiermittelzufuhr zu dem Druckausgleichsraum erfolgt über eine Schmiermittelbohrung des Außenlamellenträgers.

Darüber hinaus ist aus der nicht vorveröffentlichten DE 102 48 172 der Anmelderin ein Automatgetriebe mit einer Lamellenkupplung bekannt, die eine innerhalb eines Lamellenträgers angeordnete Servoeinrichtung in Form einer Kolben-Zylinder-Anordnung mit dynamischem Druckausgleich zur Betätigung einer Kupplung aufweist. Außerdem gehört zu diesem Automatgetriebe ein Planetenradsatz mit einem Planetenträger.

Die Servoreinrichtung dieses Getriebes besteht aus einem Kolben, der zusammen mit einer entsprechend ausgebildeten Wand des Lamellenträgers einen Druckraum bildet. Eine Druckbeaufschlagung dieses Druckraumes über eine Druckmittelzuführbohrung im Lamellenträger bewirkt nach Überwindung der Rückstellkraft einer Rückstellfeder eine axiale Verschiebung des Kolbens gegen die Lamellen.

Auf der dem Druckraum gegenüber liegenden Seite des Kolbens ist ein Druckausgleichsraum angeordnet, über den ein infolge der Kupplungsrotation auftretender dynamischer Druck auf die Kupplung zumindest annährend ausgeglichen wird. Hierzu wird der Druckausgleichsraum mit einem Schmiermittel befüllt, welches über eine in einer Nabe des Lamellenträgers angeordnete Schmiermittelbohrung zugeführt wird. Dabei wird bei diesem bekannten Getriebe der radial unterhalb der Kupplungslamellen angeordnete Druckausgleichsraum durch eine profilierte Distanzscheibe als axial feststehende Stauscheibe sowie durch einen topfförmigen Abschnitt des axial verschiebbaren Betätigungskolbens gebildet.

Die Schmiermittelversorgung der Planetenräder sowie zur Versorgung des Druckausgleichraumes erfolgt zudem über eine gemeinsame Schmiermittelzuführung, die im Bereich des Innendurchmessers der profilierten Distanzscheibe angeordnet ist und von der bereits erwähnten Schmiermittelzuführbohrung gespeist wird. Dabei erfolgt am radial innerer Schmiermitteleingang in die Druckausgleichkammer eine Aufteilung des Schmiermittelsstroms aus der Schmiermittelversorgungsbohrung in zwei Teilströme, von denen ein Teilstrom in die Druckausgleichskammer und ein zweiter Teilstrom in eine Schmiermittelkammer nahe den Planetenrädern geleitet wird.

Zur Erzielung einer möglichst kurzen Baulänge der Kupplungsanordnung ist bei diesem Getriebe vorgesehen, dass die profilierte Distanzscheibe über ihrem Umfang verteilte axial geprägte Wellungen radialer Richtung aufweist, deren durch die axiale Prägung gebildeten Nuten entweder mit einer Schmiermittelkammer zur Schmierung der Planetenräder oder mit dem Druckausgleichraum für den Kupplungsbetätigungskolben in Verbindung stehen.

Vor diesem Hintergrund ist es die Aufgabe der Erfindung, eine Kupplungsanordnung für ein Automatgetriebe vorzustellen, die sehr bauraumsparend sowohl die Versorgung von wenigstens einem Druckausgleichsraum und von wenigstens einer Lamellenkupplung mit einem Schmier- beziehungsweise Kühlmittel ermöglicht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass eine Aufteilung des Schmier- und/oder Kühlmittelstroms nicht notwenig ist, sondern dass sich die zumindest eine Kupplung auch aus der Druckausgleichskammer für den zumindest einen Kupplungsbetätigungskolben mit dem Schmier- und/oder Kühlmittel speisen lässt.

Die Erfindung geht daher von einer Kupplungsanordnung für ein Automatgetriebe mit zwei axial benachbarten Lamellenkupplungen aus, denen jeweils eine Kolben-Zylinder-Anordnung zur axialen Kupplungsbetätigung, jeweils ein Druckausgleichsraum für einen dynamischen Kupplungsbetätigungsdruckausgleich sowie jeweils Mittel zur Schmier- beziehungsweise Kühlmediumversorgung zugeordnet sind. Bei diesem Getriebe ist nun erfindungsgemäß vorgesehen, dass Lamellenpakete der beiden Kupplungen radial übereinander angeordnet sind, dass die Kolben-Zylinder-Anordnungen zur Betätigung der beiden Kupplungen zumindest weitgehend axial nebeneinander angeordnet sind, dass der Druckausgleichsraum für die radial äußere Kupplung axial an den Druckraum für die Betätigung des Kolbens der radial inneren Kupplung angrenzt, und dass der Schmier- beziehungsweise Kühlmediumstrom für die radial äußere Kupplung direkt aus dem Druckausgleichsraum für die Betätigung der äußeren Kupplung abgreifbar ist.

In einer Ausgestaltung der Erfindung ist vorgesehen, dass zwischen dem Druckraum zur Betätigung des Kolbens der radial inneren Kupplung und dem Druckausgleichsraum für den Kolben der radial äußeren Kupplung ein Lamellenträger angeordnet ist, an dem die Innenlamellen der äußeren Kupplung sowie die Außenlamellen der inneren Kupplung gemeinsam drehfest und axial verschieblich befestigt sind.

In diesem Zusammenhang ist es vorteilhaft, wenn dieser gemeinsame Lamellenträger an seinem radial inneren Abschnitt mit einer Nabe verbunden ist, die auf einer Getriebewelle angeordnet ist.

Außerdem wird es bevorzugt, wenn auf der Nabe ein Betätigungszylinder angeordnet ist, in dessen topfartigen Öffnung unter Bildung eines Druckraumes ein radial innerer Abschnitt des Kolbens zur Betätigung der äußeren Kopplung axial verschiebbar geführt ist.

Der Betätigungszylinder kann in einer anderer Ausgestaltung der Erfindung aber auch zweiteilig ausgebildet sein, wobei dessen radial innere Wand durch die Außenseite der Nabe sowie dessen axiale Rückwand und radial äußere Wand durch ein auf der Nabe aufgestecktes und mittels eines Sicherungsringes axial gesicherten Bauteils realisiert ist.

Zur Reduzierung des Montageaufwandes kann zudem vorgesehen sein, dass an der Innenseite des axial ausgerichteten Abschnitts des genannten Druckzylinders ein Dichteelement anvulkanisiert ist.

Zur Minimierung der axialen Baulänge des Automatgetriebes wird erfindungsgemäß zudem vorgeschlagen, dass die axial von dem Druckraum der Kolben-Zylinder-Anordnung für die radial äußere Kupplung wegweisenden Seite und der radial innere Abschnitt des gemeinsamen Lamellenträgers den Druckausgleichsraum für den Betätigungskolben für die radial äußere Kupplung bilden.

Um eine Rückstellbewegung des Betätigungskolbens für die äußere Kupplung bei nachlassendem Betätigungsdruck zu gewährleisten, wird zudem vorgeschlagen, dass in dem vorgenannten Betätigungskolben zugeordneten Druckausgleichsraum ein Rückstellelement angeordnet ist, das sich mit seinem einen Ende an diesem Betätigungskolben und mit seinem anderen Ende an einem radial inneren Abschnitt des gemeinsamen Lamellenträgers direkt oder indirekt abstützt.

Um nun sehr bauraumsparend das Kühl- beziehungsweise Schmiermittel aus dem Druckausgleichsraum für den Betätigungskolben der radial äußeren Kupplung zur letzteren transportieren zu können, ist in einer weiteren, sehr wichtigen Ausgestaltung der Erfindung vorgesehen, dass in diesem Druckausgleichsraum ein im wesentlichen radial ausgerichtetes Staublech an dem axial inneren Abschnitt des gemeinsamen Lamellenträgers derartig befestigt ist, dass zwischen diesen beiden Bauteilen ein Kühl- beziehungsweise Schmiermittelführungsraum gebildet ist, der zu der äußeren Kupplung führt.

Vorzugsweise ist dazu das Staublech so ausgebildet, dass dieses in einem radial inneren Abschnitt eine Durchtrittsöffnung aufweist, durch die Kühl- beziehungsweise Schmiermittel aus dem Druckausgleichsraum für die äußere Kupplung in den Kühl- beziehungsweise Schmiermittelführungsraum eintreten kann.

Zur Weiterleitung des Kühl- beziehungsweise Schmiermittels wird bevorzugt, dass im Bereich eines radial äußeren Abschnitts des Staubleches in dem gemeinsamen Lamellenträger eine radiale Öffnung ausgebildet ist, durch die das die Kühl- beziehungsweise Schmiermittel aus dem Kühl- beziehungsweise Schmiermittelführungsraum hindurchtreten kann.

Radial oberhalb der Öffnung in dem gemeinsamen Lamellenträger zwischen diesem Lamellenträger und einem radial äußeren Abschnitt des Betätigungskolbens für die radial innere Kupplung ist in Weiterbildung der Erfindung ein Strömungskanal für den Kühl- beziehungsweise Schmiermittelstrom ausgebildet, der letztlich zu dem gemeinsamen Lamellenträger für beide Kupplungen führt.

Um den Kühl- beziehungsweise Schmiermittelstrom von der Innenseite des gemeinsamen Lamellenträgers zu den Kupplungslamellen leiten zu können, kann zudem vorgesehen sein, dass in einem achsparallel ausgerichteten Abschnitt des gemeinsamen Lamellenträgers radial ausgerichtete Öffnungen ausgebildet sind, durch die der Kühl- beziehungsweise Schmiermittelstrom direkt zu den Lamellen der äußeren Kupplung B geleitet wird.

Ein weiterer positiver Aspekt der Erfindung betrifft die axiale Anordnung der Kolben in bezug auf den gemeinsamen Lamellenträger. So ist bevorzugt vorgesehen, dass im radialen Bereich der inneren Kupplung die beiden Betätigungskolben axial unmittelbar rechts- und linksseitig neben dem gemeinsamen Lamellenträger angeordnet sind.

Darüber hinaus ist es vorteilhaft, wenn das Staublech an seinem radial inneren Abschnitt von dem im Druckausgleichraum angeordneten Rückstellelement gegen den radial inneren Abschnitt des gemeinsamen Lamellenträgers gedrückt wird, so dass der axiale Presssitz dieses Staubleches am gemeinsamen Lamellenträger gewährleistet oder doch zumindest unterstützt wird.

Zudem wird es unter anderem aus Montagegründen bevorzugt, wenn das Staublech an seinem radial äußeren Abschnitt auf der Innenseite eines horizontal ausgerichteten Abschnitts des gemeinsamen Lamellenträgers radial wirksam festgeklemmt ist.

Außerdem kann das Staublech an der Innenseite seines radial äußeren Abschnitts ein Dichtmittel tragen, das den Druckausgleichsraum gegen den Betätigungskolben zur Betätigung der äußeren Kupplung druckmitteldicht abdichtet. Beispielsweise ist dieses Dichtmittel an dem Staublech anvulkanisiert, kann aber auch als ein separates Bauelement ausgeführt sein.

Hinsichtlich des Druckraums der Kolben-Zylinder-Anordnung zur Betätigung der radial inneren Kupplung wird in Ausgestaltung der erfindungsgemäßen Kupplungsanordnung vorgeschlagen, dass dieser im wesentlichen durch die von dem Druckausgleichsraum für den Betätigungskolben der äußeren Kupplung wegweisenden Wand des inneren Abschnittes des gemeinsamen Lamellenträgers und durch einen radial inneren Abschnitt Betätigungskolbens für die radial innere Kupplung gebildet ist.

Zudem wird zur Realisierung eines dynamischen Druckausgleichs für den Betätigungskolben für die radial innere Kupplung vorzugsweise vorzusehen sein, dass auf der von dem genannten Druckraum wegweisenden Seite des Betätigungskolbens für die innere Kupplung ein Druckausgleichsraum ausgebildet ist, der axial von einer auf der Nabe befestigten Stauscheibe sowie radial von der Nabe sowie dem linksseitigen und dem gemeinsamen Lamellenträger wegweisenden "t"-Schenkel des erwähnten Kolbens begrenzt ist.

Des weiteren ist zur Ermöglichung einer Rückstellbewegung des Betätigungskolbens für die radial innere Kupplung in dem Druckausgleichsraum für diesen Betätigungskolben ein Rückstellelement angeordnet, die sich axial einenends an der Stauscheibe und anderenends an dem Betätigungskolben abstützt.

Bei diesem Aufbau ist es sehr vorteilhaft, wenn die Stauscheibe den Druckausgleichsraum gegen den linksseitigen "t"-Schenkel des Kolbens über ein Dichtmittel abdichtet.

Sinnvoll ist es auch, wenn der Kolben für die Betätigung der inneren Kupplung mit dessen rechtsseitigen "t"-Schenkel axial auf einem im wesentlichen horizontal ausgerichteten Abschnitt des gemeinsamen Lamellenträgers geführt ist.

Hinsichtlich der Befestigung der Stauscheibe sowie des topfartigen Gehäuses der Kolben-Zylinder-Anordnung für die radial äußere Kupplung kann zudem vorgesehen sein, dass diese Bauteile mittels Spreng- oder anderen Sicherungsringen axial auf der Nabe gehalten sind.

Die Nabe selbst ist auf einem axialen Fortsatz des Getriebegehäuses angeordnet und über ein Axiallager gegen diese abgestützt.

Die Getriebewelle, auf der die den gemeinsamen Lamellenträger tragende Nabe angeordnet ist, ist vorzugsweise als Getriebeantriebswelle ausgebildet.

In einer weiteren Ausgestaltung der erfindungsgemäßen Kupplungsanordnung ist vorgesehen, dass auf der von dem Druckausgleichsraum für den Betätigungskolben der inneren Kupplung abgewandten Seite der Stauscheibe ein Innenlamellenträger der inneren Kupplung angeordnet und mit einer Getriebewelle verbunden ist.

Darüber hinaus ist es vorteilhaft, wenn zwischen dem Innenlamellenträger der inneren Kupplung und der Stauscheibe des Druckausgleichsraums für den Betätigungskolben der inneren Kupplung ein Strömungskanal zur Aufnahme eines Schmier- und Kühlmittelstroms für die innere Kopplung ausgebildet ist.

Zudem ist es aus Bauraumgründen sinnvoll, wenn auf der von dem letztgenannten Strömungskanal abgewandten Seite des Innenlamellenträgers der radial inneren Kupplung der Außenlamellenträger der radial äußeren Kupplung angeordnet ist.

Eine andere Ausgestaltung der Erfindung sieht vor, dass der Außenlamellenträger der radial äußeren Kupplung auf einer Getriebewelle angeordnet ist, welche über ein Axiallager gegen diejenige Getriebewelle gesichert ist, auf der der Innenlamellenträger der inneren Kupplung befestigt ist.

Außerdem ist es vorteilhaft, wenn diejenige Getriebewelle, auf der der Innenlamellenträger der inneren Kupplung befestigt ist, mittels eines Axiallagers gegen die Nabe abgestützt ist.

Eine die bauraumsparende Kupplungsanordnung nur am Rande betreffende, aber doch sehr vorteilhafte Weiterbildung der Erfindung ist darin zu sehen, dass der Betätigungskolben der äußeren Kupplung an seinem radial äußersten Ende als Drehzahlgeber für einen Drehzahlsensor ausgebildet ist, welcher durch das Getriebegehäuse in die räumliche Nähe dieses Drehzahlgebers geführt ist.

Außerdem definiert die radiale Anordnung der Ablauföffnung in dem Staublech den maximalen Flüssigkeitsspiegel, den das Schmier- oder Kühlmittel in dem Druckausgleichsraum für den Betätigungskolben der äußeren Kupplung einnimmt.

Des weiteren erfolgt die Versorgung des Druckausgleichsraumes für den Kolben der äußeren Kupplung sowie die Versorgung dieser Kupplung mit Kühl- und Schmiermittel zumindest abschnittsweise über eine Bohrung in der Nabe.

Der Druckausgleichsraum für den Betätigungskolben der radial innen angeordneten Kupplung wird dagegen mit Kühlbeziehungsweise Schmiermittel über eine Bohrung in der Nabe versorgt, die ihrerseits mit einer Bohrung in einer der Getriebewellen in Strömungsverbindung steht.

Schließlich erfolgt die Versorgung des Druckraumes für die Kolben-Zylinder-Anordnung zur Betätigung der äußeren Kupplung mit einem Betätigungsdruckmittel über eine Bohrung in der Nabe, die ihrerseits mit einer Bohrung oder Umfangsnut in dem Fortsatz des Getriebegehäuses strömungstechnisch verbunden ist.

Letztlich sei darauf hingewiesen, dass auch die Befüllung des Druckraumes des Betätigungszylinders für die radial innere Kupplung über eine Bohrung in der Nabe geschieht, die über eine gesonderte Bohrung oder Ringnut in dem Fortsatz des Getriebegehäuses in Strömungsverbindung steht.

Zur Verdeutlichung der erfindungsgemäßen Kupplungsanordnung sowie vorteilhafter Weiterbildungen und Ausgestaltungen der Erfindung ist der Beschreibung eine Zeichnung beigefügt. Diese zeigt einen Querschnitt durch ein Automatgetriebe im Bereich von zwei Lamellenkupplungen E und B, die sowohl radial als auch axial unmittelbar benachbart zueinander in einem Getriebegehäuse 2 angeordnet sind.

Das Grundkonzept dieser Kupplungsnordung sieht vor, dass die Kupplung E radial innerhalb eines Kupplungsraumes angeordnet ist, der durch einen Lamellenträger der Kupplung B gebildet wird. Dieser Lamellenträger ist mit 9 bezeichnet und als gemeinsamer Lamellenträger für beide Kupplungen B, E ausgebildet, an dem die Innenlamellen 22 eines Lamellenpaketes der radial äußeren Kupplung B und die Außenlamellen 24 eines Lamellenpaketes der radial inneren Kupplung E axial verschiebbar und drehfest angeordnet sind. Das Lamellenpaketes der (inneren) Kupplung E ist also auf einem kleineren Durchmesser angeordnet als das Lamellenpaket der (äußeren) Kupplung B, vorzugsweise räumlich gesehen radial unter dem Lamellenpaket der (äußeren) Kupplung B. Vorzugsweise ist das ist der gemeinsame Lamellenträger 9 im Bereich der getriebegehäusenahen Seite der Kupplungen E, B eingebaut.

Des weiteren ist vorgesehen, dass der Außenlamellenträger 38 der äußeren Kupplung B sowie der Innenlamellenträger 37 der inneren Kupplung E auf der getriebegehäusefernen Seite der Kupplungen E, B angeordnet sind und mit Getriebewellen 39 beziehungsweise 40 drehfest verbunden sind.

An dem gemeinsamen Lamellenträger 9 sind für die Lamellen der beiden Kupplungen B, E als Widerlager gegen eine von Kupplungsbetätigungsvorrichtungen auf die Lamellen ausgeübten Betätigungskräften dienende sogenannte Endlamellen 13, 15 axial unverschiebbar befestigt. Deren Unverschiebbarkeit ist durch einen Sprengring 16 sichergestellt, der in eine Rastnut auf dem gemeinsamen Lamellenträger eingespannt ist.

Auf der dem Sprengring 16 axial gegenüberliegenden Seite der Kupplungslamellen ist an jeder der beiden Kupplungen B, E auf dem gemeinsamen Lamellenträger 9 ein Andruckring 32, 33 axial verschiebbar angeordnet, gegen die mittels der genannten Kupplungsbetätigungsvorrichtungen zum Schließen der Kupplungen eine Betätigungskraft ausübbar ist. Die Schließkraft wirkt bei beiden Kupplungen E, B in die gleiche Richtung 35. Die Andruckringe 32, 33 können beispielsweise jeweils als Wellfeder ausgeführt sein.

Die beiden angesprochenen Kupplungsbetätigungsvorrichtungen sind als in das Getriebe integrierte Kolben-Zylinder-Anordnungen ausgebildet. In dem hier dargestellten Ausführungsbeispiel ist der einen Druckraum 6 bildende Betätigungszylinder der Betätigungsanordnung für den radial äußeren Kolben B zweiteilig ausgebildet, mit einem Zylinder 5 und einer Nabe 3. Dieser Zylinder 5 ist beispielsweise als Blechumformteil oder als Druckgussbauteil ausgeführt, in Form eines in Richtung des Lamellenpaketes der Kupplung B hin geöffneten Topfes, mit einem radial und einem axial ausgerichteten Abschnitt. Dabei ist der Zylinder 5 am Innendurchmesser seines radial ausgerichteten Abschnitts auf der Nabe 3 aufgesteckt und mittels eines Sicherungsringes 4 gegen ein axiales Verschieben in Richtung zu dem Getriebegehäuse 2 gesichert. Durch diese Bauweise bildet die radial nach außen weisende Seite der Nabe 3 den zweiten Teil des den Druckraum 6 bildenden Betätigungszylinders der Betätigungsanordnung für die radial äußere Kupplung B. Der Zylinder 5 ist dabei gegenüber der Nabe 3 druckmitteldicht abgedichtet. In dem dargestellten Ausführungsbeispiel ist hierzu an der Innenseite des axial ausgerichteten Abschnitts des Zylinders 5 ein Dichtelement 67 anvulkanisiert. In einer anderen Ausgestaltung kann jedoch auch vorgesehen sein, dass die Abdichtung des Zylinders 5 gegenüber der Nabe 3 durch ein separates Dichtelement erfolgt, das in eine geeignete Nut oder Ausnehmung des Zylinders oder der Nabe 3 eingesetzt ist. Ein derartiges separates Dichtelement kann beispielsweise ein handelsüblicher O-Ring oder eine Formdichtung sein.

Die Nabe 3 ist koaxial zu den beiden Kupplungen B, E ausgerichtet und sitzt auf einem axialen Fortsatz 52 des Getriebegehäuses 2, ist verdrehbar auf diesem Fortsatz 52 gelagert und mittels eines Axiallagers 53 axial gegen diesen Fortsatz 52 abstützt. Zu beachten ist in diesem Zusammenhang noch, dass an der Nabe 3 ein sich radial nach außen erstreckender Abschnitt 54 ausgebildet ist, der Bestandteil des gemeinsamen Lamellenträgers 9 ist oder mit diesem zumindest wirkverbunden ist.

Zurückkommend auf die Betätigungsvorrichtung für die radial äußere Kupplung B ist zu beachten, dass zu dieser ein Betätigungskolben 10 gehört, der in dem Zylinder 5 unter Bildung des Druckraumes 6 axial verschiebbar aufgenommen ist. Dieser Kolben 10 ist nahe dem Getriebegehäuse 2 zu der radial äußeren Kupplung B geführt und auf deren Andruckring 32 zur Anlage gebracht. Außerdem ist an diesem Betätigungskolben 10 an dessen radial äußersten Ende 65 eine Umfangsmarkierung ausgebildet, die als Drehzahlsignalgeber für einen durch das Getriebegehäuse 2 gesteckten Drehzahlsensor 12 dient.

Auf der von Druckraum 6 abgewandeten Seite des Betätigungskolbens 10 ist eine Druckausgleichskammer 25 für diesen Kolben 10 ausgebildet, wobei andere Wandungsteile durch die Nabe 3 beziehungsweise durch deren radialen Abschnitt 54 gebildet sind.

In diesem Druckausgleichsraum 2 ist eine achsparallel zur Betätigungsrichtung 35 ausgerichtetes Rückstellelement 26 angeordnet, das hier beispielhaft als Druckfederpaket ausgeführt ist. Selbstverständlich kann anstelle dieses Druckfederpaketes beispielsweise auch ein Tellerfeder vorgesehen sein. Das Rückstellelement 26 ist zwischen dem mittleren Abschnitt 54 des gemeinsamen Lamellenträgers 9 und dem Kolben 10 vorgespannt. In dem dargestellten Beispiel ist zwischen dem lamellenträgerseitigen Ende des Druckfederpaketes (26) und dem Lamellenträger-Abschnitt 54 ein scheibenförmiger Abschnitt des Staublechs 34 eingespannt, wodurch Staublech 34 axial an den Lamellenträger 9 angedrückt wird. Selbstverständlich kann in einer anderen Ausgestaltung das Rückstellelement 26 direkt axial an dem Lamellenträger-Abschnitt 54 anliegen, wobei dann eine geeignete andere Axialsicherung für das Staublech 34 vorgesehen sein muß.

Dieses Staublech 34 ist seinerseits zwischen dem radialen Abschnitt 54 der Nabe 3 und einem achsparallelen Abschnitt 47 des gemeinsamen Lamellenträgers 9 derart eingeklemmt, dass dieses im Bereich dieses Abschnittes 47 an einem achsparallelen Abschnitt 50 des Betätigungskolbens 10 aufliegt.

Zu erwähnen ist in diesem Zusammenhang, dass zwischen dem Betätigungskolben 10 und dem Zylinder 5 beziehungsweise der Nabe 3 sowie zwischen dem Kolben 10 und dem Staublech 34 Dichtelemente 41, 46, 49 angeordnet sind, mit deren Hilfe der Druckraum 6 und der Druckausgleichsraum 25 gegeneinander sowie gegen nicht druckbeaufschlagte Getriebebereiche axial verschiebbar angedichtet sind.

Die Versorgung des Druckraums 6 für die Kolben-Zylinder-Anordnung 3, 5, 10 zur Betätigung der äußeren Kupplung B mit einem Betätigungsdruckmittel erfolgt über eine Bohrung 58 in der Nabe 3, die ihrerseits mit einer Bohrung oder Umfangsnut 27 in dem Fortsatz 52 des Getriebegehäuses 2 strömungstechnisch verbunden ist.

Die Befüllung des Druckausgleichsraumes 25 mit einem Schmier- und/oder Kühlmittel erfolgt über eine Bohrung 57 in der Nabe 3, die von einer Bohrung oder Umfangsnut 29 in dem Fortsatz 52 des Getriebegehäuses 2 gespeist wird.

Hinsichtlich der Befüllung des Druckraumes 8 zur Betätigung der innen liegenden Kupplung E ist vorgesehen, dass die Befüllung über eine Bohrung 66 in der Nabe 3 erfolgt, die mit einer gesonderten Bohrung oder Ringnut 28 in dem Fortsatz 52 des Getriebegehäuses 2 in Strömungsverbindung steht.

Das Staublech 34 ist nun so ausgebildet und derartig in die Druckausgleichkammer 25 eingesetzt, dass zwischen diesem und den radialen Abschnitt 54 der Nabe 3 ein Strömungskanal 59 freigehalten ist, welcher eine zu dem Druckausgleichsraum 25 führende Eintrittsöffnung 51 für das Kühl- beziehungsweise Schmiermittel sowie eine Austrittsöffnung 48 in dem horizontalen Abschnitt 47 des gemeinsamen Lamellenträgers 9 aufweist.

Der Ort der Eintrittsöffnung 51 in den Strömungskanal 59 ist in radialer Richtung an dem Staublech 34 so gewählt, dass diese mit einer vorbestimmten Überlaufhöhe 7 in dem Druckausgleichsraum 25 übereinstimmt.

Kühl- beziehungsweise Schmiermittel, welches aus dem Druckausgleichraum 25 in den Kanal 59 gelangt, wandert während des Getriebebetriebes aufgrund von Zentrifugalkräften radial nach außen, so dass dieses die Öffnung 48 im horizontalen Abschnitt 47 des gemeinsamen Lamellenträgers 9 passiert und sich gemäß der gestrichelten Linie in dem Strömungskanal 62 zwischen dem von dem für beide Kupplungen B, E gemeinsamen Lamellenträger 9 und einem Betätigungskolben 17 für die innere Kupplung E radial weiter nach außen bewegt. Anschließend gelangt diese Flüssigkeit über Durchstechungen 14 in dem die Kupplungslamellen tragenden achsparallelen Abschnitt 63 des gemeinsamen Lamellenträgers 9 zwischen die Kupplungslamellen der äußeren Kupplung B.

Wie diese Darstellung verdeutlicht, wird durch die vorgeschlagene Bauweise sehr vorteilhaft und axialen Bauraum sparend die Versorgung der äußeren Kupplung B Kühlbeziehungsweise Schmiermittel bewerkstelligt, wobei die Druckausgleichkammer 25 gleichsam als Vorratsraum für das Kühl- beziehungsweise Schmiermittel dienen kann.

Die Betätigungsvorrichtung für die radial innere Kupplung E wird durch eine Kolben-Zylinder-Anordnung gebildet, dessen Druckraum 8 durch einen achsparallelen Abschnitt der Nabe 3, der von dem Staublech 34 wegweisenden Seite des radialen Abschnitts 54 der Nabe 3 sowie einem Abschnitt des Betätigungskolbens 17 dieser Betätigungsvorrichtung begrenzt wird.

Der Betätigungskolben 17 zur Betätigung der radial inneren Kupplung E hat eine etwa "t"-förmige Querschnittsgeometrie mit einen radial inneren Abschnitt, einen radial äußeren Abschnitt sowie einen von dem gemeinsamen Lamellenträger 9 wegweisenden linksseitigen "t"-Schenkel 42 und einen zu dem gemeinsamen Lamellenträger 9 weisenden rechtsseitigen "t"-Schenkel 43. Der zum gemeinsamen Lamellenträger 9 weisende "t"-Schenkel 43 wird dabei auf dem achsparallelen Abschnitt 47 des gemeinsamen Lamellenträgers 9 axial geführt.

Der Druckraum 8 ist außerdem über ein Dichtmittel 44 zwischen zu dem gemeinsamen Lamellenträger 9 und dem rechten "t"-Schenkel 43 des Betätigungskolbens 17 sowie über ein Dichtmittel 60 am radial innersten Abschnitt des Betätigungskolbens 17 gegen die Nabe 3 abgedichtet.

Auf der dem Druckraum 8 der Betätigungsvorrichtung für die innere Kupplung E gegenüberliegenden Seite des Betätigungskolbens 17 ist ein Druckausgleichsraum 31 für diesen Kolben 17 ausgebildet. Er wird über eine Bohrung 61 in der Nabe 3 sowie eine hier nicht dargestellte Bohrung in der Getriebewelle 1 mit Kühl- beziehungsweise Schmiermittel versorgt.

In diesem Druckausgleichsraum 31 ist zudem ein hier beispielhaft als Tellerfeder ausgeführtes Rückstellelement 18 erkennbar, das sich axial mit seiner einen Seite an dem Betätigungskolben 17 und mit seiner anderen Seite an einer Stauscheibe 19 abstützt. Diese Stauscheibe 19 ist auf der Nabe 3 aufgesteckt und mittels eines Sprengringes 36 axial gesichert. Zudem trägt diese Stauscheibe 19 an ihrem radialen Ende ein Dichtmittel 45, mit dessen Hilfe die Druckausgleichskammer 31 gegen den Kolben 17 abgedichtet ist.

Auf der von dem Druckausgleichsraum 31 abgewandten Seite des Staublechs 19 ist ein Strömungsweg 64 für einen gestrichelt dargestellten Kühl- beziehungsweise Schmiermittelstrom 20 dargestellt, der von dem Bereich der Nabe 3 radial nach außen zu der Innenseite des Innenlamellenträgers 37 für die innere Kupplung E führt. Über Durchstechungen in diesem Innenlamellenträger 37 gelangt die genannte Flüssigkeit direkt zwischen die Lamellen der Kupplung E. Die Zuführung des Kühl- beziehungsweise Schmiermittelstroms 20 erfolgt über eine Bohrung in einer Getriebewelle.

Schließlich sei zur Vollständigkeit der Beschreibung dieser Kupplungsanordnung darauf hingewiesen, dass der Innenlamellen 23 tragende Innenlamellenträger 37 der inneren Kupplung E mit einer Getriebewelle 39 verbunden ist, die sich in diesem Beispiel über ein Axiallager 55 gegen die Nabe 3 und die Getriebewelle 1 abstützt.

Ebensolches ist für den Außenlamellenträger 38 der radial äußeren Kupplung B vorgesehen, der an einem achsparallelen Abschnitt 11 Außenlamellen 21 trägt. Dieser Außenlamellenträger 38 ist mit einer anderen Getriebewelle 40 und/oder anderen hier nicht gezeigten Getriebebauteilen verbunden sowie mittels eines Axiallagers 56 gegen die gerade erwähnte Getriebewelle 39 axial abgestützt.

### Bezugszeichen

- 1: Getriebewelle; Getriebeeingangswelle
- 2: Getriebegehäuse; Deckel des Getriebegehäuses
- 3: Nabe
- 4: Sicherungsring
- 5: Zylinder für die Betätigungsvorrichtung für die radial äußere Kupplung B
- 6: Druckraumes für Kupplung B
- 7: Überlaufhöhe im Druckausgleichraum für Kupplung B
- 8: Druckraum für Kupplung E
- 9: Gemeinsamer Lamellenträger für die Kupplungen B und E
- 10: Betätigungskolben für Kupplung B
- 11: Achsparalleler Abschnitt am Lamellenträger für die Außenlamellen der Kupplung B
- 12: Drehzahlsensor
- 13: Endlamelle der Kupplung B
- 14: Durchstechung für Schmierölversorgung Kupplung B
- 15: Endlamelle der Kupplung E
- 16: Sprengring
- 17: Betätigungskolben der Kupplung E
- 18: Rückstellelement für den Kolben der Kupplung E
- 19: Stauscheibe der Kupplung E
- 20: Kühlmittelstrom für Kupplung E
- 21: Außenlamellen der Kupplung B
- 22: Innenlamellen der Kupplung B
- 23: Innenlamellen der Kupplung E
- 24: Außenlamellen der Kupplung E
- 25: Druckausgleichsraum für die Kupplung B
- 26: Rückstellelement für die Kupplung B
- 27: Bohrung oder Umfangsnut in dem Fortsatz 52
- 28: Bohrung oder Umfangsnut in dem Fortsatz 52
- 29: Bohrung oder Umfangsnut in dem Fortsatz 52
- 30: Kühl- beziehungsweise Schmiermittelstrom für die Kupplung B
- 31: Druckausgleichsraum für die Kupplung E
- 32: Andruckring für Kupplung B
- 33: Andruckring für Kupplung E
- 34: Staublech im Druckausgleichsraum für Kupplung B
- 35: Schließrichtung der Kupplungen B und E
- 36: Sprengring
- 37: Innenlamellenträger der inneren Kupplung E
- 38: Außenlamellenträger der äußeren Kupplung B
- 39: Getriebewelle
- 40: Getriebewelle
- 41: Dichtmittel
- 42: Linker "t"-Schenkel des Betätigungskolbens 17
- 43: Rechter "t"-Schenkel des Betätigungskolbens 17
- 44: Dichtmittel
- 45: Dichtmittel
- 46: Dichtmittel
- 47: Achsparalleler Abschnitt des gemeinsamen Lamellenträgers 9
- 48: Öffnung in dem gemeinsamen Lamellenträger
- 49: Dichtmittel
- 50: Achsparalleler Abschnitt des Betätigungskolbens 10
- 51: Öffnung in dem Staublech 34
- 52: Axialer Fortsatz des Getriebegehäuses
- 53: Axiallager
- 54: Mittlerer Abschnitt des gemeinsamen Lamellenträgers 9 bzw. radialer Abschnitt der Nabe 3
- 55: Axiallager
- 56: Axiallager
- 57: Bohrung in der Nabe 3 zur Versorgung des Druckausgleichsraumes 25
- 58: Bohrung in der Nabe 3 zur Versorgung des Druckraumes 6
- 59: Kühl- beziehungsweise Schmiermittelführungsraum für den Kühl- beziehungsweise Schmiermittelstrom 30
- 60: Dichtmittel
- 61: Bohrung zur Versorgung des Druckausgleichsraumes 31
- 62: Strömungskanal für den Kühl- beziehungsweise Schmiermittelstrom 30
- 63: achsparallel ausgerichteten äußerer Abschnitt des gemeinsamen Lamellenträgers 9
- 64: Strömungsweg
- 65: Radial äußerster Abschnitt des Kolbens 10
- 66: Bohrung in der Nabe
- 67: Dichtelement

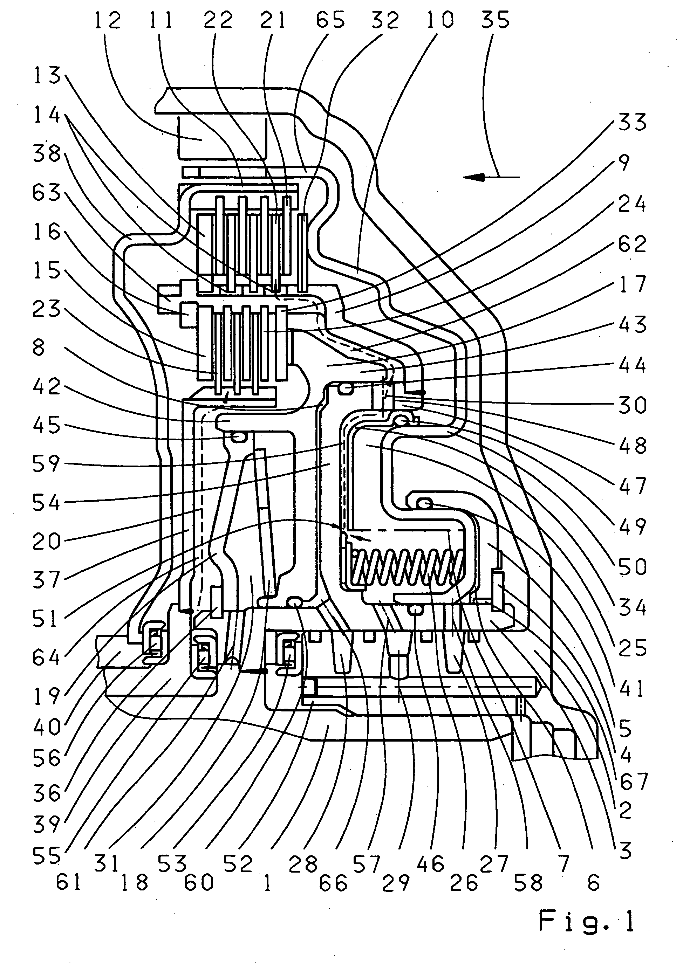

## Patentansprüche

1. Kupplungsanordnung in einem Automatgetriebe, mit zwei axial benachbarten Lamellenkupplungen (B, E), denen jeweils eine Kolben-Zylinder-Anordnung zur axialen Kupplungsbetätigung, jeweils ein Druckraum für die axiale Betätigung, jeweils ein Druckausgleichsraum für einen dynamischen Kupplungsbetätigungsdruckausgleich, sowie jeweils Mittel zur Schmierbeziehungsweise Kühlmediumversorgung zugeordnet sind,
**dadurch gekennzeichnet,**
**dass** die beiden Kupplungen (B, E) radial übereinander angeordnet sind,
**dass** die Kolben-Zylinder-Anordnungen zur Betätigung der beiden Kupplungen (B, E) zumindest weitgehend axial nebeneinander angeordnet sind,
**dass** der Druckausgleichsraum (25) für die radial äußere Kupplung (B) axial neben dem Druckraum (8) für die Betätigung eines Kolbens (17) der radial inneren Kupplung (E) angeordnet ist,
und **dass** der Schmier- beziehungsweise Kühlmediumstrom (30) für die radial äußere Kupplung (B) direkt aus dem Druckausgleichsraum (25) für die Betätigung der äußeren Kupplung (B) abgreifbar ist.

2. Kupplungsanordnung nach Anspruch 1, **dadurch gekennzeichnet, dass** zwischen dem Druck-raum (8) zur Betätigung des Kolbens (17) der radial inneren Kupplung (E) und dem Druckausgleichsraum (25) für einen Kolben (10) der radial äußeren Kupplung (B) ein gemeinsamer Lamellenträger (9) der radial inneren und der radial äußeren Kupplung (B, E) angeordnet ist, an dem sowohl die Innenlamellen (22) der äußeren Kupplung (B) als auch die Außenlamellen (24) der inneren Kupplung (E) gemeinsam drehfest und axial verschieblich befestigt sind.

3. Kupplungsanordnung nach Anspruch 2, **dadurch gekennzeichnet, dass** der gemeinsame Lamellenträger (9) an einem radial inneren Abschnitt mit einer Nabe (3) des Lamellenträgers (9) verbunden ist, die auf einer ersten Getriebewelle (1) angeordnet und mit dieser ersten Getriebewelle (1) verbunden ist.

4. Kupplungsanordnung nach Anspruch 1, 2 oder 3, **dadurch gekennzeichnet, dass** auf der Nabe (3) ein gegenüber der Nabe (3) druckmitteldicht abgedichteter Zylinder (5) angeordnet ist, in dessen topfartige Öffnung unter Bildung eines Druckraumes (6) ein radial innerer Abschnitt des Kolbens (10) für die äußere Kupplung (B) axial verschiebbar geführt ist.

5. Kupplungsanordnung nach Anspruch 4, **dadurch gekennzeichnet, dass** der Zylinder (5) zweiteilig ausgebildet ist, wobei dessen radial innere Wand durch die Außenseite die Nabe (3) sowie dessen axiale Rückwand und radial äußere Wand durch ein auf der Nabe (3) aufgestecktes und mittels eines Sicherungsringes (4) axial gesicherten Bauteils gebildet ist.

6. Kupplungsanordnung nach einem der Ansprüche 1 bis 5, **dadurch gekennzeichnet, dass** zwischen der axial von dem Druckraum (6) der Kolben-Zylinder-Anordnung für die radial äußere Kupplung (B) wegweisenden Seite und dem radial inneren Abschnitt (54) des gemeinsamen Lamellenträgers (9) der Druckausgleichsraum (25) für den Kolben (10) ausgebildet ist.

7. Kupplungsanordnung nach einem der Ansprüche 1 bis 6, **dadurch gekennzeichnet, dass** in dem Druckausgleichsraum (25) für den Betätigungskolben (10) für die äußere Kupplung (B) ein Rückstellelement (26) angeordnet ist, die sich axial mit ihrem einen Ende an diesem Betätigungskolben (10) und mit ihrem anderen Ende an dem radial inneren Abschnitt (54) des gemeinsamen Lamellenträgers (9) direkt oder indirekt (34) abstützt.

8. Kupplungsanordnung nach einem der Ansprüche 1 bis 7, **dadurch gekennzeichnet, dass** in dem Druckausgleichsraum (25) für den Kolben (10) ein radial ausgerichtetes Staublech (34) an dem axial inneren Abschnitt (54) des gemeinsamen Lamellenträgers (9) derartig befestigt ist, dass zwischen diesen beiden Bauteilen ein Kühl- beziehungsweise Schmiermittelführungsraum (59) für den Kühl- beziehungsweise Schmiermittelstrom (30) für die äußere Kupplung (B) ausgebildet ist.

9. Kupplungsanordnung nach einem der Ansprüche 1 bis 8, **dadurch gekennzeichnet, dass** das Staublech (34) an einem radial inneren Abschnitt eine Eintrittsöffnung (51) aufweist, durch die Kühl- beziehungsweise Schmiermittel aus dem Druckausgleichsraum (25) für die äußere Kupplung (B) in den Kühl- beziehungsweise Schmiermittelführungsraum (59) eintreten kann, wobei die radiale Anordnung der Öffnung (51) in dem Staublech (34) den maximalen Flüssigkeitsspiegel (7) definiert, den das Schmier- oder Kühlmittel in dem Druckausgleichsraum (25) für den Betätigungskolben (10) der äußeren Kupplung (B) einnimmt.

10. Kupplungsanordnung nach einem der Ansprüche 1 bis 9, **dadurch gekennzeichnet, dass** im Bereich eines radial äußeren Abschnitts des Staubleches (34) in dem gemeinsamen Lamellenträger (9) eine radiale Austrittsöffnung (48) ausgebildet ist, durch die das die Kühl- beziehungsweise Schmiermittel aus dem Kühl- beziehungsweise Schmiermittelführungsraum (59) austreten kann,
und dass in einem achsparallel ausgerichteten Abschnitt (63) des gemeinsamen Lamellenträgers (9) radial ausgerichtete Öffnungen (14) ausgebildet sind, durch die der Kühl- beziehungsweise Schmiermittelstrom (30) zu den Lamellen (21, 22) der äußeren Kupplung (B) gelangen kann,
wobei radial oberhalb der Austrittsöffnung (48) in dem gemeinsamen Lamellenträger (9) zwischen diesem Lamellenträger (9) und einem radial äußeren Abschnitt eines Betätigungskolbens (17) für die radial innere Kupplung (E) ein Strömungskanal (62) für den Kühl- beziehungsweise Schmiermittelstrom (30) ausgebildet ist.

11. Kupplungsanordnung nach einem der Ansprüche 1 bis 10, **dadurch gekennzeichnet, dass** das Staublech (34) an seinem radial inneren Abschnitt von dem im Druckausgleichraum (25) angeordneten Rückstellelement (26) axial gegen den radial inneren Abschnitt (54) des gemeinsamen Lamellenträgers (9) gedrückt wird.

12. Kupplungsanordnung nach einem der Ansprüche 1 bis 11, **dadurch gekennzeichnet, dass** das Staublech (34) an seinem radial äußeren Abschnitt auf der Innenseite eines horizontal ausgerichteten Abschnitts (47) des gemeinsamen Lamellenträgers (9) festgeklemmt ist,
wobei das Staublech (34) an der Innenseite seines radial äußeren Abschnitts ein Dichtmittel (49) trägt, das den Druckausgleichsraum (25) gegen den Betätigungskolben (10) zur Betätigung der äußeren Kupplung (B) abdichtet.

13. Kupplungsanordnung nach einem der Ansprüche 1 bis 12, **dadurch gekennzeichnet, dass** der Druckraum (8) der Kolben-Zylinder-Anordnung zur Betätigung der radial inneren Kupplung (E) im wesentlichen durch die von dem Druckausgleichsraum (25) für den Kolben (10) der äußeren Kupplung (B) wegweisenden Wand des inneren Abschnittes (54) des gemeinsamen Lamellenträgers (9) sowie einen Abschnitt der Nabe (3) gebildet ist,
dass für die innere Kupplung (E) ein Druckausgleichsraum (31) ausgebildet ist, der durch die Nabe (3), die Stauscheibe (19) sowie durch die von dem gemeinsamen Lamellenträger (9) wegweisende Seite des Betätigungskolbens (17) begrenzt ist,
dass in dem Druckausgleichsraum (31) für den Betätigungskolben (17) der inneren Kupplung (E) ein Rückstellelement (18) angeordnet ist, das axial zwischen Stauscheibe (19) und Betätigungskolben (17) der inneren Kupplung (E) eingespannt ist,
dass die Stauscheibe (19) der inneren Kupplung (E) den Druckausgleichsraum (31) der inneren Kupplung (E) gegen den von dem gemeinsamen Lamellenträger (9) wegweisenden linksseitigen "t"-Schenkel (42) des Kolbens (17) über ein Dichtmittel (45) abdichtet,
dass der Kolben (17) für die Betätigung der inneren Kupplung (E) mit dessen rechtsseitigen "t"-Schenkel (43) auf dem achsparallelen Abschnitt (47) des gemeinsamen Lamellenträgers (9) axial geführt wird,
und dass die Stauscheibe (19) sowie der Zylinder (5) mittels Sprengringen (4, 36) axial auf der Nabe (3) gesichert sind.

14. Kupplungsanordnung nach einem der Ansprüche 1 bis 13, **dadurch gekennzeichnet, dass** die Nabe (3) auf einem axialen Fortsatz (52) des Getriebegehäuses (2) angeordnet ist, auf diesem Fortsatz (52) verdrehbar gelagert ist, und über ein Axiallager (53) axial gegen diesen Fortsatz (52) abgestützt ist.

15. Kupplungsanordnung nach einem der Ansprüche 1 bis 14, **dadurch gekennzeichnet, dass** auf der von dem Druckausgleichsraum (31) für den Betätigungskolben (17) der inneren Kupplung (E) abgewandten Seite der Stauscheibe (19) ein Innenlamellenträger (37) der inneren Kupplung (E) angeordnet und mit einer zweiten Getriebewelle (39) verbunden ist,
dass zwischen dem Innenlamellenträger (37) und der Stauscheibe (19) des Druckausgleichsraumes (31) für den Betätigungskolben (17) der inneren Kupplung (E) ein Strömungsweg (64) zur Aufnahme eines Schmier- und Kühlmittelstroms (20) für die innere Kupplung (E) ausgebildet ist,
und dass auf der von dem Strömungsweg (64) abgewandten Seite des Innenlamellenträgers (37) der inneren Kupplung (E) der Außenlamellenträger (38) der radial äußeren Kupplung (B) angeordnet ist.

16. Kupplungsanordnung nach einem der Ansprüche 1 bis 15, **dadurch gekennzeichnet, dass** der Außenlamellenträger (38) der radial äußeren Kupplung (B) auf einer dritten Getriebewelle (40) angeordnet ist, welche über ein Axiallager (56) gegen die zweite Getriebewelle (39), auf der der Innenlamellenträger (37) der inneren Kupplung (E) befestigt ist, gesichert ist,
wobei die den Innenlamellenträger (37) der inneren Kupplung (E) tragende zweite Getriebewelle (39) mittels eines Axiallagers (55) gegen die die Nabe (3) tragende erste Getriebewelle (1) und/oder gegen die Nabe (3) abgestützt ist.

17. Kupplungsanordnung nach einem der Ansprüche 1 bis 16, **dadurch gekennzeichnet, dass** der Betätigungskolben (10) der äußeren Kupplung (B) an seinem radial äußersten Ende einen achsparallelen Abschnitt (65) aufweist, der als Drehzahlgeber für einen Drehzahlsensor (12) ausgebildet ist.

18. Kupplungsanordnung nach einem der Ansprüche 1 bis 17, **dadurch gekennzeichnet, dass** die Versorgung des Druckausgleichsraumes (25) für den Kolben (10) der äußeren Kupplung (B) sowie deren Kühl- und Schmiermittelversorgung über eine Bohrung (57) in der Nabe (3) erfolgt, die mit einer Bohrung (29) im Fortsatz (52) des Getriebegehäuses (2) strömungstechnisch in Verbindung steht,
und dass die Versorgung des Druckraumes (6) für die Kolben-Zylinder-Anordnung (3, 5, 10) zur Betätigung der äußeren Kupplung (B) mit einem Betätigungsdruckmittel über eine Bohrung (58) in der Nabe (3) erfolgt, die ihrerseits mit einer Bohrung oder Umfangsnut (27) in dem Fortsatz (52) des Getriebegehäuses (2) strömungstechnisch verbunden ist.

19. Kupplungsanordnung nach einem der Ansprüche 1 bis 18, **dadurch gekennzeichnet, dass** die Befüllung des Druckraumes (8) des Betätigungszylinders für die radial innere Kupplung (E) über eine Bohrung (66) in der Nabe (3) erfolgt, die mit einer gesonderten Bohrung oder Ringnut (28) in dem Fortsatz (52) des Getriebegehäuses (2) in Strömungsverbindung steht,
und dass der Druckausgleichsraum (31) über eine Bohrung (61) in der Nabe (3) mit Kühl- beziehungsweise Schmiermittel versorgbar ist.

## Claims

1. Clutch arrangement in an automatic transmission, having two axially adjacent multiple disc clutches (B, E) which are assigned in each case one piston/cylinder arrangement for axial clutch actuation, in each case one pressure chamber for the axial actuation, in each case one pressure equalization chamber for a dynamic clutch actuation pressure equalization, and in each case means for the supply of lubricant or coolant, **characterized in that** the two clutches (B, E) are arranged radially above one another, **in that** the piston/cylinder arrangements for actuating the two clutches (B, E) are arranged at least largely axially next to one another, **in that** the pressure equalization chamber (25) for the radially outer clutch (B) is arranged axially next to the pressure chamber (8) for the actuation of a piston (17) of the radially inner clutch (E), and **in that** the flow (30) of lubricant or coolant for the radially outer clutch (B) can be tapped off directly from the pressure equalization chamber (25) for the actuation of the outer clutch (B).

2. Clutch arrangement according to Claim 1, **characterized in that** a common multiple-disc carrier (9) for the radially inner and the radially outer clutches (B, E) is arranged between the pressure chamber (8) for actuating the piston (17) of the radially inner clutch (E) and the pressure equalization chamber (25) for a piston (10) of the radially outer clutch (B), to which multiple-disc carrier (9) both the inner discs (22) of the outer clutch (B) and the outer discs (24) of the inner clutch (E) are jointly fastened in a rotationally fixed and axially displaceable manner.

3. Clutch arrangement according to Claim 2, **characterized in that** the common multiple-disc carrier (9) is connected at a radially inner section to a hub (3) of the multiple-disc carrier (9), which hub (3) is arranged on a first transmission shaft (1) and is connected to the said first transmission shaft (1).

4. Clutch arrangement according to Claim 1, 2 or 3, **characterized in that** a cylinder (5) which is sealed with respect to the hub (3) against pressure medium is arranged on the hub (3), in the cup-like opening of which cylinder (5) a radially inner section of the piston (10) for the outer clutch (B) is guided axially displaceably with the formation of a pressure chamber (6).

5. Clutch arrangement according to Claim 4, **characterized in that** the cylinder (5) is configured in two parts, its radially inner wall being formed by the outer side of the hub (3) and its axial rear wall and radially outer wall being formed by a component which is plugged on the hub (3) and is secured axially by means of a securing ring (4).

6. Clutch arrangement according to one of Claims 1 to 5, **characterized in that** the pressure equalization chamber (25) for the piston (10) is formed between the side which points axially away from the pressure chamber (6) of the piston/cylinder arrangement for the radially outer clutch (B) and the radially inner section (54) of the common multiple-disc carrier (9).

7. Clutch arrangement according to one of Claims 1 to 6, **characterized in that** a restoring element (26) is arranged in the pressure equalization chamber (25) for the actuating piston (10) for the outer clutch (B), which restoring element (26) is supported, directly or indirectly (34), axially with one end on the said actuating piston (10) and with its other end on the radially inner section (54) of the common multiple-disc carrier (9).

8. Clutch arrangement according to one of Claims 1 to 7, **characterized in that**, in the pressure equalization chamber (25) for the piston (10), a radially oriented baffle plate (34) is fastened to the axially inner section (54) of the common multiple-disc carrier (9) in such a way that a coolant or lubricant guide chamber (59) for the flow (30) of coolant or lubricant for the outer clutch (B) is formed between the said two components.

9. Clutch arrangement according to one of Claims 1 to 8, **characterized in that**, on a radially inner section, the baffle plate (34) has an inlet opening (51), through which coolant or lubricant from the pressure equalization chamber (25) for the outer clutch (B) can enter the coolant or lubricant guide chamber (59), the radial arrangement of the opening (51) defining, in the baffle plate (34), the maximum liquid level (7) which the lubricant or coolant assumes in the pressure equalization chamber (25) for the actuating piston (10) of the outer clutch (B).

10. Clutch arrangement according to one of Claims 1 to 9, **characterized in that**, in the region of a radially outer section of the baffle plate (34) in the common multiple-disc carrier (9), a radial outlet opening (48) is formed, through which the coolant or lubricant can emerge from the coolant or lubricant guide chamber (59), and **in that**, in a section (63) of the common multiple-disc carrier (9) which is oriented in an axially parallel manner, radially oriented openings (14) are formed, through which the flow (30) of coolant or lubricant can pass to the discs (21, 22) of the outer clutch (B), a flow channel (62) for the flow (30) of coolant or lubricant being formed radially above the outlet opening (48) in the common multiple-disc carrier (9), between the said multiple-disc carrier (9) and a radially outer section of an actuating piston (17) for the radially inner clutch (E).

11. Clutch arrangement according to one of Claims 1 to 10, **characterized in that**, on its radially inner section, the baffle plate (34) is pressed axially against the radially inner section (54) of the common multiple-disc carrier (9) by the restoring element (26) which is arranged in the pressure equalization chamber (25).

12. Clutch arrangement according to one of Claims 1 to 11, **characterized in that** the baffle plate (34) is clamped fixedly at its radially outer section on the inner side of a horizontally oriented section (47) of the common multiple-disc carrier (9), the baffle plate (34) carrying, on the inner side of its radially outer section, a sealing means (49) which seals the pressure equalization chamber (25) with respect to the actuating piston (10) for actuating the outer clutch (B).

13. Clutch arrangement according to one of Claims 1 to 12, **characterized in that** the pressure chamber (8) of the piston/cylinder arrangement for actuating the radially inner clutch (E) is formed substantially by that wall of the inner section (54) of the common multiple-disc carrier (9) which points away from the pressure equalization chamber (25) for the piston (10) of the outer clutch (B), and by a section of the hub (3), **in that** a pressure equalization chamber (31) which is delimited by the hub (3), the baffle disc (19) and by that side of the actuating piston (17) which points away from the common multiple-disc carrier (9) is formed for the inner clutch (E), **in that** a restoring element (18) which is clamped in axially between the baffle disc (19) and the actuating piston (17) of the inner clutch (E) is arranged in the pressure equalization chamber (31) for the actuating piston (17) of the inner clutch (E), **in that** the baffle disc (19) of the inner clutch (E) seals the pressure equalization chamber (31) of the inner clutch (E) via a sealing means (45) with respect to that left-hand-side "t" limb (42) of the piston (17) which points away from the common multiple-disc carrier (9), **in that** the piston (17) for the actuation of the inner clutch (E) is guided axially with its right-hand-side "t" limb (43) on the axially parallel section (47) of the common multiple-disc carrier (9), and **in that** the baffle disc (19) and the cylinder (5) are secured axially on the hub (3) by means of circlips (4, 36).

14. Clutch arrangement according to one of Claims 1 to 13, **characterized in that** the hub (3) is arranged on an axial projection (52) of the transmission housing (2), is mounted rotatably on the said projection (52), and is supported axially against the said projection (52) via an axial bearing (53).

15. Clutch arrangement according to one of Claims 1 to 14, **characterized in that** an inner multiple-disc carrier (37) of the inner clutch (E) is connected to a second transmission shaft (39) and is arranged on that side of the baffle disc (19) which faces away from the pressure equalization chamber (31) for the actuating piston (17) of the inner clutch (E), **in that** a flow path (64) for receiving a flow (20) of lubricant and coolant for the inner clutch (E) is formed between the inner multiple-disc carrier (37) and the baffle disc (19) of the pressure equalization chamber (31) for the actuating piston (17) of the inner clutch (E), and **in that** the outer multiple-disc carrier (38) of the radially outer clutch (B) is arranged on that side of the inner multiple-disc carrier (37) of the inner clutch (E) which faces away from the flow path (64).

16. Clutch arrangement according to one of Claims 1 to 15, **characterized in that** the outer multiple-disc carrier (38) of the radially outer clutch (B) is arranged on a third transmission shaft (40) which is secured via an axial bearing (56) with respect to the second transmission shaft (39), to which the inner multiple-disc carrier (37) of the inner clutch (E) is fastened, the second transmission shaft (39) which carries the inner multiple-disc carrier (37) of the inner clutch (E) being supported by means of an axial bearing (55) with respect to the first transmission shaft (1) which carries the hub (3) and/or with respect to the hub (3).

17. Clutch arrangement according to one of Claims 1 to 16, **characterized in that** the actuating piston (10) of the outer clutch (B) has, at its radially outermost end, an axially parallel section (65) which is configured as a rotational-speed transmitter for a rotational-speed sensor (12).

18. Clutch arrangement according to one of Claims 1 to 17, **characterized in that** the supply of the pressure equalization chamber (25) for the piston (10) of the outer clutch (B) and its coolant and lubricant supply take place via a hole (57) in the hub (3), which hole (57) is flow-connected to a hole (29) in the projection (52) of the transmission housing (2), and **in that** the supply of the pressure chamber (6) for the piston/cylinder arrangement (3, 5, 10) for actuating the outer clutch (B) with an actuating pressure medium takes place via a hole (58) in the hub (3), which hole (58) for its part is flow-connected to a hole or circumferential groove (27) in the projection (52) of the transmission housing (2).

19. Clutch arrangement according to one of Claims 1 to 18, **characterized in that** the pressure chamber (8) of the actuating cylinder for the radially inner clutch (E) is filled via a hole (66) in the hub (3), which hole (66) is flow-connected to a separate hole or annular groove (28) in the projection (52) of the transmission housing (2), and **in that** the pressure equalization chamber (31) can be supplied with coolant or lubricant via a hole (61) in the hub (3).

## Revendications

1. Système d'embrayage dans une boîte de vitesses automatique, avec deux embrayages multidisques axialement voisins (B, E), auxquels sont associés chaque fois un système piston-cylindre pour l'actionnement axial de l'embrayage, une chambre de pression pour l'actionnement axial, une chambre d'équilibrage de pression pour un équilibrage dynamique de la pression d'actionnement de l'embrayage, ainsi que des moyens pour l'alimentation en lubrifiant et en réfrigérant, **caractérisé en ce que** les deux embrayages (B, E) sont disposés radialement l'un au-dessus de l'autre, **en ce que** les systèmes piston-cylindre pour l'actionnement des deux embrayages (B, E) sont au moins largement disposés axialement l'un à côté de l'autre, **en ce que** la chambre d'équilibrage de pression (25) pour l'embrayage radialement extérieur (B) est disposée axialement à côté de la chambre de pression (8) pour l'actionnement d'un piston (17) de l'embrayage radialement intérieur (E), et **en ce que** le flux de lubrifiant ou de réfrigérant (30) pour l'embrayage radialement extérieur (B) peut être prélevé directement dans la chambre d'équilibrage de pression (25) pour l'actionnement de l'embrayage radialement extérieur (B).

2. Système d'embrayage selon la revendication 1, **caractérisé en ce qu'**il se trouve, entre la chambre de pression (8) pour l'actionnement du piston (17) de l'embrayage radialement intérieur (E) et la chambre d'équilibrage de pression (25) pour un piston (10) de l'embrayage radialement extérieur (B), un support à disques commun (9) de l'embrayage radialement intérieur et de l'embrayage radialement extérieur (B, E), sur lequel aussi bien les disques intérieurs (22) de l'embrayage extérieur (B) que les disques extérieurs (24) de l'embrayage intérieur (E) sont fixés ensemble de manière solidaire en rotation et mobile axialement.

3. Système d'embrayage selon la revendication 2, **caractérisé en ce que** le support de disques commun (9) est assemblé sur un segment radialement intérieur à un moyeu (3) du support de disques (9), qui est disposé sur un premier arbre (1) de la boîte de vitesses et est relié à ce premier arbre (1) de la boîte de vitesses.

4. Système d'embrayage selon la revendication 1, 2 ou 3, **caractérisé en ce qu'**un cylindre (5) étanche au fluide sous pression par rapport au moyeu (3) est disposé sur le moyeu (3), cylindre dans l'ouverture en forme de pot duquel est guidé de façon axialement coulissante, avec formation d'une chambre de pression (6), un segment radialement intérieur du piston (10) pour l'embrayage extérieur (B).

5. Système d'embrayage selon la revendication 4, **caractérisé en ce que** le cylindre (5) est réalisé en deux parties, dans lequel sa paroi radialement intérieure est formée par le côté extérieur du moyeu (3) et sa paroi arrière axiale et sa paroi radialement intérieure sont formées par un composant engagé sur le moyeu (3) et calé axialement au moyen d'un circlip (4).

6. Système d'embrayage selon l'une quelconque des revendications 1 à 5, **caractérisé en ce que** la chambre d'équilibrage de pression (25) pour le piston (10) est formée entre le côté orienté axialement en direction opposée à la chambre de pression (6) du système piston-cylindre pour l'embrayage radialement extérieur (B) et le segment radialement intérieur (54) du support de disques commun (9).

7. Système d'embrayage selon l'une quelconque des revendications 1 à 6, **caractérisé en ce qu'**il se trouve dans la chambre d'équilibrage de pression (25) pour le piston d'actionnement (10) pour l'embrayage radialement extérieur (B) un élément de rappel (26), qui s'appuie axialement, directement ou indirectement (34), par sa première extrémité sur ce piston d'actionnement (10) et par son autre extrémité sur le segment radialement intérieur (54) du support de disques commun (9).

8. Système d'embrayage selon l'une quelconque des revendications 1 à 7, **caractérisé en ce qu'**une chicane (34) orientée radialement est fixée au segment radialement intérieur (54) du support de disques commun (9) dans la chambre d'équilibrage de pression (25) pour le piston (10), de telle manière qu'une chambre de guidage de réfrigérant ou de lubrifiant (59) pour le flux de réfrigérant ou de lubrifiant (30) pour l'embrayage extérieur (B) soit formée entre ces deux composants.

9. Système d'embrayage selon l'une quelconque des revendications 1 à 8, **caractérisé en ce que** la chicane (34) présente sur une partie radialement intérieure une ouverture d'entrée (51), par laquelle un réfrigérant ou un lubrifiant provenant de la chambre d'équilibrage de pression (25) pour l'embrayage extérieur (B) peut pénétrer dans la chambre de guidage de réfrigérant ou de lubrifiant (59), dans lequel l'agencement radial de l'ouverture (51) dans la chicane (34) définit le niveau de liquide maximal (7) que le lubrifiant ou le réfrigérant atteint dans la chambre d'équilibrage de pression (25) pour le piston d'actionnement (10) de l'embrayage extérieur (B).

10. Système d'embrayage selon l'une quelconque des revendications 1 à 9, **caractérisé en ce qu'**une ouverture de sortie radiale (48) est formée dans le support de disques commun (9) dans la région d'une partie radialement extérieure de la chicane (34), par laquelle le réfrigérant ou le lubrifiant peut sortir de la chambre de guidage de réfrigérant ou de lubrifiant (59), et **en ce que** des ouvertures orientées radialement (14) sont formées dans une partie (63) du support de disques commun (9) orientée parallèlement à l'axe, par lesquelles le flux de réfrigérant ou de lubrifiant (30) peut arriver sur les disques (21, 22) de l'embrayage extérieur (B), dans lequel un canal d'écoulement (62) pour le flux de réfrigérant ou de lubrifiant (30) est formé, radialement au-dessus de l'ouverture de sortie (48) dans le support de disques commun (9), entre ce support de disques (9) et un segment radialement extérieur d'un piston d'actionnement (17) pour l'embrayage radialement intérieur (E).

11. Système d'embrayage selon l'une quelconque des revendications 1 à 10, **caractérisé en ce que** la chicane (34) est pressée, sur sa partie radialement intérieure, contre le segment radialement intérieur (54) du support de disques commun (9) par l'élément de rappel (26) disposé dans la chambre d'équilibrage de pression (25).

12. Système d'embrayage selon l'une quelconque des revendications 1 à 11, **caractérisé en ce que** la chicane (34) est serrée à sa partie radialement extérieure sur le côté intérieur d'une partie orientée horizontalement (47) du support de disques commun (9), dans lequel la chicane (34) porte sur le côté intérieur de sa partie radialement extérieure un moyen d'étanchéité (49), qui rend étanche la chambre d'équilibrage de pression (25) par rapport au piston d'actionnement (10) pour l'actionnement de l'embrayage extérieur (B).

13. Système d'embrayage selon l'une quelconque des revendications 1 à 12, **caractérisé en ce que** la chambre de pression (8) du système piston-cylindre pour l'actionnement de l'embrayage radialement intérieur (E) est formée essentiellement par la paroi du segment intérieur (54) du support de disques commun (9) orienté à l'opposé de la chambre d'équilibrage de pression (25) pour le piston (10) de l'embrayage extérieur (B) ainsi que par une partie du moyeu (3), **en ce qu'**une chambre d'équilibrage de pression (31) est formée pour l'embrayage intérieur (E), laquelle est délimitée par le moyeu (3), l'écran (19) ainsi que par le côté du piston d'actionnement (17) orienté à l'opposé du support de disques commun (9), **en ce qu'**il se trouve dans la chambre d'équilibrage de pression (31) pour le piston d'actionnement (17) de l'embrayage intérieur (E) un élément de rappel (18), qui est inséré axialement entre l'écran (19) et le piston d'actionnement (17) de l'embrayage intérieur (E), **en ce que** l'écran (19) de l'embrayage intérieur (E) rend étanche la chambre d'équilibrage de pression (31) de l'embrayage intérieur (E) par rapport à la branche "t" (42) du piston (17) orientée à l'opposé du support de disques commun (9) à l'aide d'un moyen d'étanchéité (45), **en ce que** le piston (17) pour l'actionnement de l'embrayage intérieur (E) est guidé axialement avec sa branche "t" droite (43) sur la partie (47) du support de disques commun (9) parallèle à l'axe, et **en ce que** l'écran (19) et le cylindre (5) sont fixés axialement sur le moyeu (3) au moyen de circlips (4, 36).

14. Système d'embrayage selon l'une quelconque des revendications 1 à 13, **caractérisé en ce que** le moyeu (3) est disposé sur un prolongement axial (52) du boîtier de boîte de vitesses (2), est monté de façon rotative sur ce prolongement (52) et est appuyé axialement contre ce prolongement (52) au moyen d'un palier axial (53).

15. Système d'embrayage selon l'une quelconque des revendications 1 à 14, **caractérisé en ce qu'**un support de disques intérieur (37) de l'embrayage intérieur (E) est disposé sur le côté de l'écran (19) situé à l'opposé de la chambre d'équilibrage de pression (31) pour le piston d'actionnement (17) de l'embrayage intérieur (E) et est relié à un deuxième arbre (39) de la boîte de vitesses, **en ce qu'**un chemin d'écoulement (64) est formé entre le support de disques intérieur (37) et l'écran (19) de la chambre d'équilibrage de pression (31) pour le piston d'actionnement (17) de l'embrayage intérieur (E) afin de recevoir un courant de lubrifiant ou de réfrigérant (20) pour l'embrayage intérieur (E), et **en ce que** le support de disques extérieur (38) de l'embrayage radialement extérieur (B) est disposé sur le côté du support de disques intérieur (37) de l'embrayage intérieur (E) situé à l'opposé du chemin d'écoulement (64).

16. Système d'embrayage selon l'une quelconque des revendications 1 à 15, **caractérisé en ce que** le support de disques extérieur (38) de l'embrayage radialement extérieur (B) est disposé sur un troisième arbre (40) de la boîte de vitesses, qui est fixé au moyen d'un palier axial (56) par rapport au deuxième arbre (39) de la boîte de vitesses, sur lequel le support de disques intérieur (37) de l'embrayage intérieur (E) est fixé, dans lequel le deuxième arbre (39) de la boîte de vitesses portant le support de disques intérieur (37) de l'embrayage intérieur (E) est appuyé au moyen d'un palier axial (55) contre le premier arbre (1) de la boîte de vitesses portant le moyeu (3) et/ou contre le moyeu (3).

17. Système d'embrayage selon l'une quelconque des revendications 1 à 16, **caractérisé en ce que** le piston d'actionnement (10) de l'embrayage extérieur (B) présente sur son extrémité radialement extérieure un segment (65) parallèle à l'axe, qui est réalisé en forme de capteur de vitesse de rotation pour un détecteur de vitesse de rotation (12).

18. Système d'embrayage selon l'une quelconque des revendications 1 à 17, **caractérisé en ce que** l'alimentation de la chambre d'équilibrage de pression (25) pour le piston (10) de l'embrayage extérieur (B) ainsi que son alimentation en réfrigérant et en lubrifiant est effectuée par un alésage (57) dans le moyeu (3), qui est en communication d'écoulement avec un alésage (29) dans le prolongement (52) du boîtier de boîte de vitesses (2), et **en ce que** l'alimentation de la chambre de pression (6) pour le système piston-cylindre (3, 5, 10) pour l'actionnement de l'embrayage extérieur (B) avec un fluide d'actionnement sous pression est effectuée par un alésage (58) dans le moyeu (3), qui est à son tour en communication d'écoulement avec un alésage ou une rainure périphérique (27) dans le prolongement (52) du boîtier de boîte de vitesses (2).

19. Système d'embrayage selon l'une quelconque des revendications 1 à 18, **caractérisé en ce que** le remplissage de la chambre de pression (8) du cylindre d'actionnement pour l'embrayage radialement intérieur (E) est effectué par un alésage (66) dans le moyeu (3), qui est en communication d'écoulement avec un alésage séparé ou une rainure annulaire (28) dans le prolongement (52) du boîtier de boîte de vitesses (2), et **en ce que** la chambre d'équilibrage de pression (31) peut être alimentée en réfrigérant et en lubrifiant par un alésage (61) dans le moyeu (3).
